**Europäisches Patentamt**

**European Patent Office**

**Office européen des brevets**

(11) Publication number: **0 163 487**
**A2**

(12) # EUROPEAN PATENT APPLICATION

(21) Application number: **85303621.8**

(22) Date of filing: **22.05.85**

(51) Int. Cl.⁴: **B 60 G 5/00**
**B 60 K 17/36**

(30) Priority: **26.05.84 DE 3419808**

(43) Date of publication of application:
**04.12.85 Bulletin 85/49**

(84) Designated Contracting States:
**AT BE CH DE FR GB IT LI LU NL SE**

(71) Applicant: **Fend, Fritz M.**
**Thurmayerstrasse 11**
**D-8400 Regensburg(DE)**

(72) Inventor: **Fend, Fritz M.**
**Thurmayerstrasse 11**
**D-8400 Regensburg(DE)**

(74) Representative: **Molyneaux, Martyn William et al,**
**LANGNER PARRY 52-54 High Holborn**
**London WC1V 6RR(GB)**

(54) Cross-country vehicle.

(57) A cross-country vehicle has a centre beam (7) and on each side thereof a wheel beam (1, 2) each carrying at least three wheels (4). Each wheel beam (1, 2) is connected at the longitudinal centre of the centre beam by a universal articulation (6) and at both the front and rear of the vehicle there is provided a pair of guide rods (11, 12) each one of a pair of guide rods connecting a respective one of the wheel beams to the centre beam. Each guide rod has one end connected by a universal joint (13) to the associated wheel beam (1, 2) and its other end connected by a universal joint (14) to the centre beam (7), the location of said other end of each guide rod being connected to the centre beam at an opposite side of a longitudinal axis of the centre beam from the wheel beam to which said guide rod is connected. Additionally the guide rods (12, 13) are arranged to be located below the horizontal plane of the universal articulation (6).

Fig. 2

## CROSS-COUNTRY VEHICLE

This invention relates to a cross-country vehicle, that is to a vehicle for travelling across rough terrain such as in forests.

A known cross-country vehicle is disclosed in West German Offenlegungsschrift 2,437,476. Such a known cross-country vehicle has a centre beam and on each of the longitudinal sides of the centre beam is a respective wheel beam, each wheel beam having at least three driven wheels and each wheel beam being universally articulated to the centre beam via a ball-and-socket joint. Additionally, each wheel beam is mutually articulately connected to the centre beam by a guide rod which is arranged immediately below the ball-and-socket joint in the vertical direction and the wheel beams are further connected mutually and to the centre beam at the vehicle front end via a guide rod arrangement, so that when a wheel beam is pivoted about the ball-and-socket joint in one direction the other wheel beam is rotated about its ball-and-socket joint in the opposite direction. The disclosed guide rod arrangement consists of two wishbones, each forming a right-angled triangle, which are articulated by the apex enclosing the right angle to the centre beam at a first articulation point and are likewise connected articulately to the centre beam via a pendulum stanchion at a second articulation point located vertically below the first articulation point. The third externally located apex of each wishbone is attached articulately to a wheel beam. This known cross-country vehicle is relatively complicated as regards the suspension of the wheel beams on the centre beam. The known cross-country vehicle also exhibits, inter alia, the disadvantage that, due to the arrangement of the guide rod immediately below the ball-and-socket joint, this guide rod is unable, or not optimally able, to absorb shocks which, for example, are exerted laterally upon the rear end of one of the two wheel beams, when travelling across country.

The object of this invention is to provide a cross-country vehicle which exhibits a particularly simple construction as regards the suspension of the wheel beams on the centre beam.

According to this invention there is provided a cross-country vehicle having a centre beam and two parallel and equi-spaced wheel beams located on each side of a longitudinal axis of the centre beam, each wheel beam having at least three longitudinally spaced driven wheels, a universal articulation means arranged to connect each wheel beam to the centre beam, the universal articulation means having a common axis oriented transversely to the longitudinal axis, and a guide rod arrangement connecting a forward end of each wheel beam to the centre beam, characterised in that the guide rod arrangement is provided at both forward and rearward ends of each wheel beam, and in that each guide rod arrangement comprises a pair of guide rods, one end of each guide rod being connected to a respective wheel beam by first universal articulation means with the other end thereof being connected to the centre beam by a second universal articulation means, the location of the second universal articulation means being on the opposite side of the axis from the first universal articulation means and both the first and second universal articulation means being located below the universal articulation means.

Due to the fact that, in the vehicle according to the invention, only one single bar-like guide rod is employed instead of a guide rod arrangement formed by wishbones, a substantial structural simplification is achieved. Simultaneously, by the arrangement according to the invention of the articulation points of all the guide rods on the centre beam in the form that the articulation point of each guide rod on the centre beam is located on that side of the median axis of the centre beam opposite to that wheel beam to which the guide rod is likewise articulated, an extremely great length of the individual guide rods is afforded which, during pivoting of the wheel beams about the articulation in a ball-and-socket fashion produces an extremely small track error, so that satisfactory travelling of the vehicle across country is ensured.

In the vehicle according to the invention, the individual guide rods are preferably articulated to the wheel beams or to the centre beam respectively via ball-and-socket joints or articulations acting in ball-and-socket fashion, or else via cardan-type joints.

The invention will now be described by way of example with reference to the accompanying drawings in which:-

Fig. 1 shows, in a simplified diagrammatic illustration a plan view of a cross-country vehicle in accordance with this invention;

Fig. 2 shows a rear elevation of the vehicle shown in Fig. 1 viewed in the direction of the arrow-headed line A of Fig. 1;

Fig. 3 shows a perspective view of one of the two wheel beams of the cross-country vehicle shown in Fig. 1; and

Fig. 4 shows a left hand side elevation of one embodiment of the centre beam of the cross-country vehicle shown in Fig. 1.

In the figures like reference numerals denote like parts.

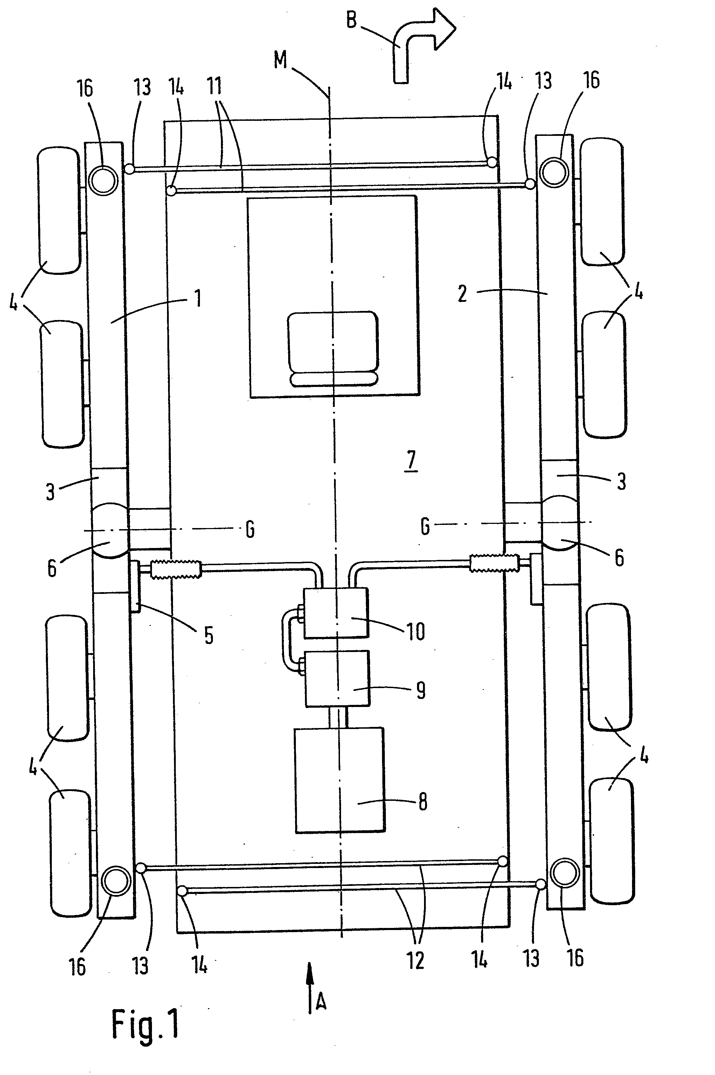

The cross-country vehicle shown in the figures has two parallel wheel beams 1 and 2 each equi-spaced about a longitudinal median axis M and disposed on a respective longitudinal side of a centre beam 7. Each wheel beam 1, 2 is formed by an elongate girder-like and box-like element which is increased in height at a median portion 3. As shown in Fig. 1 the wheel beams 1, 2 are located with their longitudinal extent in the longitudinal direction of the vehicle, indicated by arrow-headed line A. Each wheel beam 1 and 2 serves for the unsprung mounting of four driven wheels 4 which are provided on the outer longitudinal sides of the wheel beams and the wheels are equipped, for example, with low-pressure tyres exhibiting a degree of self-springing. A hydraulic motor 5, the output shaft of which is propulsively associated with the drive shafts of each of the wheels 4 via drive elements (not shown) accommodated in the relevant wheel beam 1 or 2, is provided on each wheel beam 1 and 2 for motive force of the vehicle.

Each wheel beam 1 and 2 is universally articulated in its median portion 3 by an articulation 6 to a respective longitudinal side of the centre beam 7 and the two articulations 6 are arranged on a common axis G oriented transversely or perpendicularly to the longitudinal direction of the vehicle (arrow-headed line A) and/or to the median axis M of the vehicle. Each articulation 6 is either a ball-and-socket joint or an articulation acting in a ball-and-socket fashion, that is to say, an articulation which permit pivotal movement of the wheel beams 1 and 2 not only about the horizontal axis G, but also about an axis parallel to the vehicle longitudinal axis M and about a further vertical axis likewise oriented perpendicularly to the axis G. Articulations acting in ball-and-socket fashion are, for example, such articulations that have a bolt attached to the centre beam 7, which bolt is encased by a joint sleeve which is in turn encompassed by a bush of resilient material, for example rubber, the bush being retained on a bracket to the appropriate wheel beam 1 or 2.

A drive motor 8, mounted on the axis M on the centre beam 7, drives a pump 9 for a hydraulic fluid (for example oil), the inputs and outputs of which form, together with a control valve device 10, parts of hydraulic medium flow circuits, in which the two hydraulic motors 5 are also arranged on the wheel beams 1 and 2. The hydraulic connections with the hydraulic motors 5, at least in the transitional region between the centre beam 7 and the wheel beams 1 and 2, are made via flexible hoses. In order to keep the movement of the hydraulic motors 5 as small as possible during rotation or pivoting of the wheel beams 1 and 2 about the articulations 6, the hydraulic motors 5 are retained on the wheel beams 1 and 2 in immediate proximity of the articulations 6.

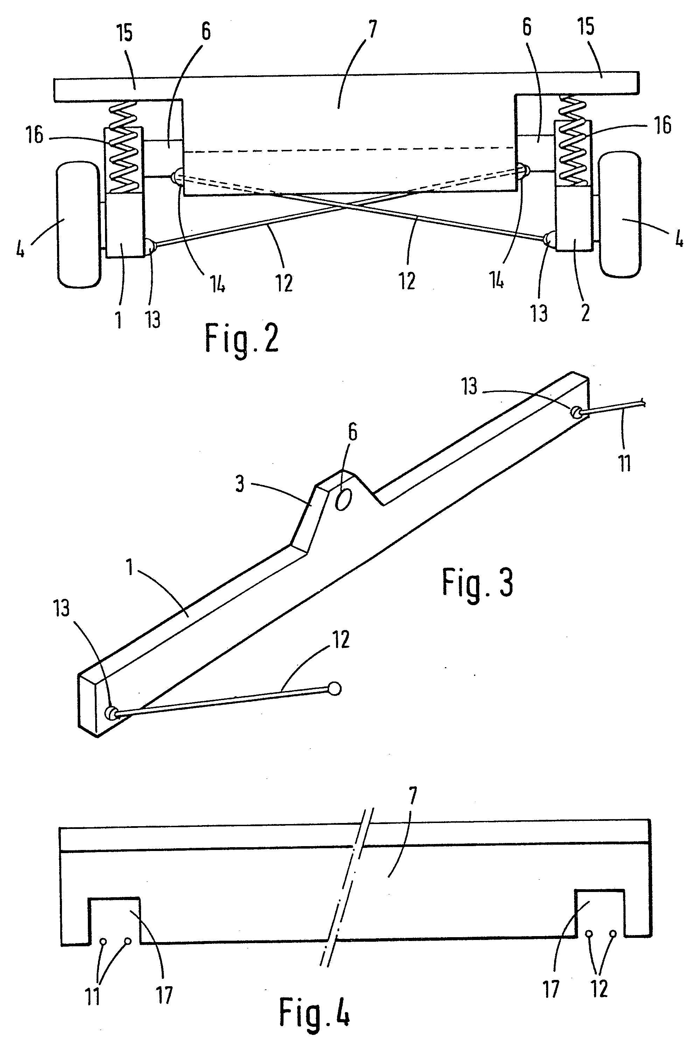

Each wheel beam 1 and 2 is connected to the centre beam 7 via two bar-shaped guide rods 11 and 12 constructed as pendulum stanchions. The guide rod 11 is provided at the front end of the relevant wheel beam 1 or 2, and the guide rod 12 is located at the rear end of the relevant wheel beam 1 or 2. The opposite ends of each guide rod 11 and 12 are both universally articulated by means of a ball-and-socket joint or an articulation acting in ball-and-socket fashion; one end articulation 13 is connected to an appropriate wheel beam 1 or 2, and the opposite end articulation 14 is connected to the centre beam 7. As particularly shown in Figs. 2 and 3, the articulations 13 are arranged on the wheel beams 1 and 2 so that they are located below the respective articulation 6 and are approximately equi-spaced thereabout in the longitudinal direction at opposing ends of the wheel beams 1 and 2. The articulations 6 and 13 on each wheel beam therefore form an isosceles triangle in a vertical plane.

As Fig. 2 shows, the two guide rods 11 and 12 provided respectively at the front end and at the rear end of the vehicle are oriented obliquely upwards towards the centre of the vehicle, starting from the articulation point 13, when the two wheel beams 1 and 2 are not rotated relative to the centre beam 7; that is to say, the wheel beams 1 and 2 and also the centre beam 7 are located with their respective longitudinal extent in a horizontal plane. As Figs. 1 and 2 further show, the articulation points 14 for the guide rods 11 and 12 are arranged so that the two guide rods 11 and 12 provided at the front end and at the rear end of the vehicle, respectively, cross or overlap each other. Thus the articulation 14 for the guide rod 12, the other end of which is articulated to the wheel beam 1, is located on that longitudinal side of the centre beam 7 which is adjacent to the wheel beam 2, that is to say closer to the wheel beam 2 than to the wheel beam 1. In the same manner, the articulation 14 for the guide rod 12, the other end of which is articulated to the wheel beam 2 is located closer to the wheel beam 1 than to the wheel beam 2. The articulations 14 for the two guide rods 11 are also arranged on the centre beam 7 at the front end of the vehicle in the same manner. The two wheel beams 1 and 2 are thus secured against tilting about the horizontal and vertical axis by the guide rods 11 and 12, in spite of the use of the articulations 6. In order to obtain a definite position of the centre beam 7 relative to the two wheel beams 1 and 2, the centre beam 7 has a frame part 15 which is provided on each of the two longitudinal sides of the centre beam 7 which is spaced above the wheel beams 1 and 2 and is braced against the ends of the wheel beams 1 and 2 respectively via four springs 16.

The articulation of the two wheel beams 1 and 2 to the centre beam 7 by means of the articulations 6 and the guide rods 11 and 12 constructed as pendulum stanchions has the advantage that shocks which are exerted upon the ends of the wheel beams 1 and 2 laterally or in the direction transverse to the longitudinal direction of the vehicle, when travelling over irregular terrain for example, cannot become operative as bending moments in the articulations 6, but are transmitted directly to the centre beam 7 by the guide rods 11 and 12 provided at the ends of the two wheel beams 1 and 2. The elements used for articulating the wheel beams 1 and 2 are therefore subject only to minimum loading even in the case of major lateral shocks to the wheel beams 1 and 2, whilst, due to the arrangement of the wheels 4 on the outer sides of the wheel beams 1 and 2 and due to the arrangement of the articulations 6 above the guide rods 11 and 12, it is ensured that these guide rods are normally stressed exclusively in traction. The guide rods 11 and 12 may therefore be constructed with a relatively small cross-section. In order that these guide rods may also transmit shock and/or compression forces to the centre beam 7 when travelling over irregular terrain, the guide rods 11 and 12 are of straight construction.

It is furthermore ensured by the above-described arrangement of the articulations 14 and by the above-described crossing of the guide rods 11 and 12, that these guide rods exhibit a comparatively great length, so that, when the wheel beams 1 and 2 pivot about the articulations 6 relative to the centre beam 7 whilst travelling over irregular terrain, track variations, caused by pivoting between the wheel beams 1 and 2 and the centre beam 7 or the articulations 14 thereon in the horizontal direction transverse to the longitudinal direction of the vehicle, are kept small, so that only a small track error is also obtained, which cannot impair the travelling characteristics of the cross-country vehicle.

In order to take into consideration the mutually contradictory requirements for greatest possible length of the guide rods 11 and 12, greatest possible ground clearance and lowest possible overall height of the vehicle, in those places where the guide rods 11 and 12 are provided, longitudinally extending recesses 17 (shown in Fig. 4) are provided on the underside of the centre beam 7, which recesses supply the necessary clearance for the movement and/or pivoting of the guide rods 11 and 12. The low overall height is necessary in the case of the cross-country vehicle so as to prevent the vehicle overturning when travelling across a precipitous terrain.

Steering for the cross-country vehicle is effected by differential drive of the wheels provided on the two wheel beams 1 and 2. Thus, to turn, the wheels 4 located on the inside during the change of travel direction are braked and only the outer wheels 4 are driven, whilst, due to the pivotable arrangement of the wheel beams 1 and 2 and due to their bracing via the springs 16 against the centre beam 7, a diagonal loading and unloading of the wheels 4 on the two longitudinal sides of the vehicle is produced. For example, if a travel direction change is made in the direction arrow B in Fig. 1, then the two wheel beams 1 and 2 are pivoted relative to the centre beam 7 by braking the wheels 4 on the wheel beam 2 and by driving the wheels 4 on the wheel beam 1 such that the wheel beam 2 front wheel and the wheel beam 1 rear wheel are lightly loaded whereas the remaining wheels 4 are heavily loaded. By this means, the slip which inevitably occurs between the ground and the wheels 4 in the case of a travel direction change is greatly reduced, whereby the turning performance of the vehicle is improved and the wear of the tyres or wheels 4 is also greatly reduced.

The invention has been described above with reference to an exemplary embodiment. It is to be understood that modifications and variations are possible without thereby departing from the idea underlying the invention.

CLAIMS:

1.      A cross-country vehicle having a centre beam (7) and two parallel and equi-spaced wheel beams (1, 2) located on each side of a longitudinal axis (M) of the centre beam (7), each wheel beam (1, 2) having at least three longitudinally spaced driven wheels (4), a universal articulation means (6) arranged to connect each wheel beam to the centre beam, the universal articulation means (6) having a common axis oriented transversely to the longitudinal axis (M), and a guide rod arrangement (11, 13, 14) connecting a forward end of each wheel beam to the centre beam, characterised in that the guide rod arrangement is provided at both forward and rearward ends of each wheel beam (1, 2), and in that each guide rod arrangement comprises a pair of guide rods (11, 12), one end of each guide rod being connected to a respective wheel beam (1, 2) by first universal articulation means (13) with the other end thereof being connected to the centre beam (7) by a second universal articulation means (14), the location of the second universal articulation means (14) being on the opposite side of the axis (M) from the first universal articulation means (13) and both the first and second universal articulation means (13, 14) being located below the universal articulation means (6).

2.      A cross-country vehicle according to claim 1, characterised in that the location of the first universal articulation means (13) on the respective wheel beam (1, 2) is lower than the location of the second universal articulation means on the centre beam (7) so that the guide rods of each arrangement form a cross transverse to the axis (M).

3.      A cross-country vehicle according to claim 1 or 2, characterised in that location of the first articulation means (13) of the forward and rearward guide rod arrangements in combination with the universal articulation means (6) form the apices of a triangle.

4.      A cross-country vehicle according to claim 3, characterised in that said triangle is an isosceles triangle.

5.      A cross-country vehicle according to any preceding claim, characterised in that the universal articulation means (13) are arranged at remote ends of the wheel beams (1, 2).

6.      A cross-country vehicle according to any preceding claim, characterised in that the centre beam (7) is further connected to the wheel beams (1, 2) by a spring (16) located adjacent each end thereof.

7.　　A cross-country vehicle according to any preceding claim, characterised in that the guide rods (11, 12) are of straight construction.

8.　　A cross-country vehicle according to any preceding claim, characterised in that a hydraulic motor (5) drive, is provided on each wheel beam (1, 2) adjacent the universal articulation means (6).

9.　　A cross-country vehicle according to any preceding claim, characterised in that all said universal articulation means (6, 13, 14) are of a ball-and-socket type.

Fig.1

0163487

2/2

Fig. 2

Fig. 3

Fig. 4